# EUROPEAN PATENT SPECIFICATION

(11) **EP 2 913 957 B1**
(45) Date of publication and mention of the grant of the patent: **20.03.2019**
(21) Application number: 13848183.3
(22) Date of filing: 06.09.2013
(51) Int. Cl.: H04L 29/12, H04L 12/24, H04W 12/08, H04L 29/06, H04L 12/26

(54) **METHOD AND APPARATUS FOR CONTROLLING INTERNET ACCESS**
VERFAHREN UND VORRICHTUNG ZUR STEUERUNG EINES INTERNETZUGANGS
PROCÉDÉ ET APPAREIL DE COMMANDE D'ACCÈS À INTERNET

(30) Priority: 24.10.2012 CN 201210411033
(43) Date of publication of application: 02.09.2015
(73) Proprietor: ZTE Corporation, Shenzhen, Guangdong 518057 (CN)
(72) Inventor: ZHOU, Zhaoyang, Shenzhen Guangdong 518057 (CN)
(74) Representative: Novagraaf Technologies
(86) International application number: PCT/CN2013/083075
(87) International publication number: WO 2014/063536

(56) References cited:
- WO-A1-2008/076311
- CN-A- 1 901 707
- CN-A- 1 980 158
- CN-A- 102 118 749
- US-A1- 2005 090 230
- US-A1- 2007 155 384
- US-A1- 2012 244 832

## Description

### TECHNICAL FIELD

The present invention relates to the field of communications, and in particular to a method and device for controlling an internet access.

### BACKGROUND

As the mobile communication technology and mobile terminal (for example a cell phone) technology develop, the penetration of mobile terminals has far more exceeded that of Person Computer (PC), and meanwhile, the number of users accessing the internet via mobile terminals has also exceeded that of users accessing the internet via PCs. The main reasons for the above exceeding are in that: mobile network technology develops rapidly and wireless bandwidths improve increasingly, thus the speed of accessing the internet via a mobile terminal increases gradually; the fees for network accessing of the mobile terminal is getting lower year by year to the extent acceptable for most groups; the mobile terminal has the more mobilized and portable advantages that the terminals such as a PC do not have; the software for mobile terminals are smarter, the difference between the experience of accessing the internet via a mobile terminal and that of accessing the internet via a PC decreases gradually; and the hardware for mobile terminals develops rapidly and the operating speed increases very fast, thus providing better operating experience.

Just for the above reasons, with the booming of accessing the internet via a mobile terminal, mobile terminals have become one of the main ways in which people use and participate in the internet, and have covered various groups gradually. From the perspective of market analysis, the groups may be segmented by different segmentation modes such as age dimension and occupational dimension. With the further division of the market groups, there will be a variety of personalized and differentiated demands. Some class of users requiring to monitor the network accessing of another class of users is a personalized demand in market segments. For example, since children are not mature in their mind, it is necessary for parents to constraint their network accessing to control the range of the websites that they can access via a mobile terminal. For the monitoring of the address range of the websites that the mobile terminal logs in, different solutions are provided mainly from the terminal software level at present, which are mainly the monitoring software for the network accessing of a PC, lacking effective monitoring means for the network accessing of mobile terminals, and further lacking a way for effectively and being able to control the access of users to the internet from the network side of a operator.

For the problem in the related art that the network side cannot monitor the network accessing of mobile terminals, a valid solution has not been proposed yet at present.

D1 (US 2007/155384A1), D2 (US2012/244832A1) and D3 (US2005/0090230 A1) provide respective technical solutions; however, the above mentioned problem still remains unsolved.

### SUMMARY

The present invention provides a method and device for controlling an internet access as disclosed by the appended claims, so that the problem in the related art that the network side cannot monitor the network accessing of a mobile terminal is solved.

### BRIEF DESCRIPTION OF THE DRAWINGS

Drawings, provided for further understanding of the present invention and forming a part of the specification, are used to explain the present invention together with embodiments of the present invention rather than to limit the present invention, wherein:
Fig. 1 is a flowchart of a method for controlling an internet access according to an embodiment of the present invention;
Fig. 2 is a structural block diagram of a device for controlling an internet access according to an embodiment of the present invention;
Fig. 3 is a first preferred structural block diagram of an acquiring component according to an embodiment of the present invention;
Fig. 4 is a second preferred structural block diagram of the acquiring component according to an embodiment of the present invention;
Fig. 5 is a first preferred structural block diagram of the device for controlling an internet access according to an embodiment of the present invention;
Fig. 6 is a second preferred structural block diagram of the device for controlling internet access according to an embodiment of the present invention;
Fig. 7 is a schematic diagram of a system for controlling an internet access via a cell phone terminal according to a second embodiment of the present invention;
Fig. 8 is a flowchart of service provisioning in a method for controlling a cell phone terminal to access an internet according to a second embodiment of the present invention;
Fig. 9 is a flowchart of cancelling a provisioned service in a method for controlling a cell phone terminal to access an internet according to a second embodiment of the present invention;
Fig. 10 is a flowchart of maintaining a monitoring relationship by a system in a method for controlling a cell phone terminal to access an internet according to a second embodiment of the present invention;
Fig. 11 is a flowchart of maintaining a website accessible to a monitored user by a system in a method for controlling a cell phone terminal to access an internet according to a second embodiment of the present invention; and
Fig. 12 is a flowchart of system monitoring in a method for controlling a cell phone terminal to access an internet according to a second embodiment of the present invention.

### DESCRIPTION OF EMBODIMENTS

The preferred embodiments are described in conjunction with the drawings as follows. It shall be understood that the embodiments of the present application and the features of the embodiments can be combined with each other if there is no conflict.

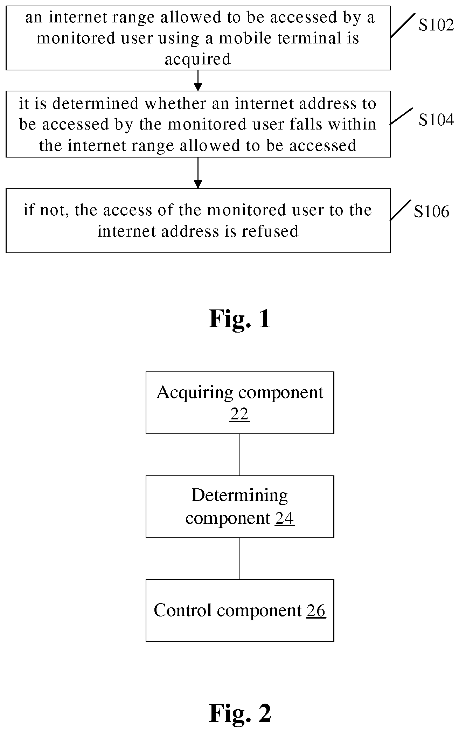

A method for controlling an internet access is provided in an embodiment. Fig. 1 is a flowchart of a method for controlling an internet access according to an embodiment of the present invention, and as shown in Fig. 1, the method comprises the following steps.

Step S102, an internet range allowed to be accessed by a monitored user using a mobile terminal is acquired.

Step S104, it is determined whether an internet address to be accessed by the monitored user falls within the internet range allowed to be accessed.

Step S106, if not, the access of the monitored user to the internet address is refused.

In the embodiment, a network side acquires the internet range allowed to be accessed by the monitored user using the mobile terminal, determines whether the internet address to be accessed by the monitored user falls within the internet range allowed to be accessed, and if not, refuses the monitored user to access the internet address, thus achieving the control over the internet range allowed to be accessed by the monitored user and solving the problem in the related art that the network side cannot monitor the network accessing of the mobile terminal, thereby improving the monitoring capability and expanding the type of the network side.

The above monitored user may refer to the Subscriber Identity Module (SIM) card representing the user. In this case, the internet may be accessed through a WAP access point set, and then the internet access is controlled by the above control method; or the above monitored user may also refer to the mobile terminal representing the user.

In a preferred implementation, the internet range allowed to be accessed by the monitored user can be set in a list of internet addresses. In this case, it is determined whether the internet address to be accessed by the monitored user exists in the above list of internet addresses; if so, it is determined that the internet address falls within the internet range allowed to be accessed; if not, it is determined that the internet address does not fall within the internet range allowed to be accessed. This way is simple and easy to carry out.

As a preferred implementation, the above internet range allowed to be accessed by the monitored user may be set by a monitoring user corresponding to the monitored user. For example, the internet range allowed to be accessed by the monitored user that is provided by the monitoring user may be received and the monitored user may be monitored within the internet range. In this way, the flexibility of setting the internet range allowed to be accessed by the monitored user is improved.

Preferably, after the internet range allowed to be accessed by the monitored user is set, the monitoring user may change the internet range. For example, an changing operation on an internet address in the internet range allowed to be accessed that are provided by the monitoring user is received and the internet range allowed to be accessed is changed according to the changing operation. Changing operations may comprise a add operation, an update operation, and/or a delete operation. In this way, the flexibility of setting the internet range allowed to be accessed by the monitored user is further improved.

Preferably, if the same monitored user is monitored by multiple monitoring users, for example, in the case where parents together monitor their child, internet ranges allowed to be accessed that are provided by the above multiple monitoring users may be merged and shared. In this way, if one of the above multiple monitoring users sets some internet addresses allowed to be accessed, other monitoring users do not need make additions to the internet addresses, thus improving the efficiency of the monitoring users setting the internet addresses allowed to be accessed.

Preferably, a monitoring relationship between the monitoring user and the monitored user may be established in advance, and the monitored user is monitored according to the monitoring relationship. In this way, the managing capability of the network side to the monitoring relationship is improved.

Preferably, the monitoring relationship between the monitoring user and the monitored user may be established according to an application from the monitoring user, for example, a monitoring request provided by the monitoring user may be received. The monitoring request carries an identification of the monitored user (for example, Mobile Station International Integrated Services Digital Number (MSISDN) of the mobile terminal corresponding to the monitored user), or an identification of Subscriber Identity Component (SIM) card corresponding to the monitored user, the monitoring relationship between the monitoring user and the monitored user may be established according to the identification.

Preferably, in order to make the monitoring relationship easy, it is possible that one monitored user is monitored by only one monitoring user. In this case, it may be determined whether the user that the above identification corresponds to is in a valid monitoring relationship. If so, it means that the user that the above identification corresponds to has been being monitored by other monitoring users, thus the above monitoring request may be refused. If the identification of the monitored user is not in the effective monitoring relationship, a confirmation request may be sent to the monitored user, wherein the confirmation request is used by the monitored user to confirm the monitoring relationship with the above monitoring user; and after receiving a response message which is in response to the confirmation request and is from the monitored user, the above monitoring relationship is established, wherein the above response message carries indication information used for indicating that the monitored user agrees to establish the monitoring relationship. In this way, the malicious monitoring of the monitored user by a bad user is avoided and the security and reliability of schemes are increased.

Preferably, the monitoring user may cancel the above monitoring relationship, for example, a request for cancelling the monitoring relationship provided by the monitoring user may be received and the above monitoring relationship is cancelled according to the request for cancelling the monitoring relationship, and meanwhile, the internet range allowed to be accessed by the monitored user in the monitoring relationship that is stored on the network side may be deleted. In this way, the storage resources on the network side are saved.

Preferably, when the above monitoring relationship is cancelled, it may be determined whether the monitoring user sending the request for cancelling the monitoring relationship is in the effective monitoring relationship first; if so, the above monitoring relationship may be cancelled; if not, the request for cancelling the monitoring relationship is ignored.

Preferably, as required, one monitoring user may also establish a monitoring relationship with multiple monitored users, for example, after establishing a monitoring relationship with one monitored user, the monitoring user may also establish a monitoring relationship with other monitored users. In this way, this scheme may be made applicable to the scene where one manager monitors multiple managed ones, thus expending the applicable scope of the scheme.

Preferably, the methods for communicating between the network side and the monitoring user and/or the monitored user include but not limited to one of the following: text message, WEB, Unstructured Supplementary Service Data (USSD), and Interactive Voice Response (IVR).

Corresponding to the above method, a device for controlling an internet access is also provided in this embodiment, and the device is configured to implement the above embodiment and preferred implementation, which has been described, thereby needing no further description. As used below, the term "component" can implement the combination of software and/or hardware with pre-set functions. Although the device is relatively better implemented in software, hardware, or a combination of software and hardware is possibly contemplated.

Fig. 2 is a structural block diagram of a device for controlling an internet access according to an embodiment of the present invention, and as shown in Fig. 2, the device comprises: an acquiring component **22,** a determining component **24** and a control component **26.** The above components are described below in detail.

The acquiring component **22** is configured to acquire an internet range allowed to be accessed by a monitored user using a mobile terminal; the determining component **24** connected with the acquiring component **22** is configured to determine whether the internet address to be accessed by the monitored user falls within an internet range allowed to be accessed; the control component **26** connected with the determining component **24** is configured to refuse an access of the monitored user to the internet address if a determining result of the determining component **24** is "NO".

Through the above components in this embodiment, after the acquiring component **22** on the network side acquires the internet range allowed to be accessed by the monitored user using the mobile terminal, the determining component **24** determines whether the internet address to be accessed by the monitored user falls within the above internet range allowed to be accessed, and if not, the control component **26** refuses the access of the monitored user to the internet address, thus achieving the control over the internet range to be accessed by the monitored user and solving the problem in the related art that the network side cannot monitor the network accessing of the mobile terminal, thereby improving the monitoring capability and expanding the type of the network side.

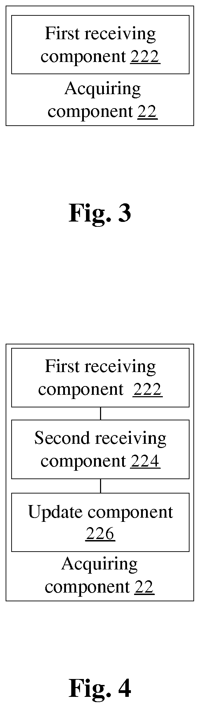

Fig. 3 is a first preferred structural block diagram of the acquiring component **22** according to an embodiment of the present invention, and as shown in Fig. 3, the acquiring component **22** may comprises: a first receiving component **222** configured to receive the corresponding internet range allowed to be accessed by the monitored user that is provided by the monitoring user corresponding to the monitored user.

Fig. 4 is a second preferred structural block diagram of the acquiring component **22** according to an embodiment of the present invention, and as shown in Fig. 4, the acquiring component **22** may comprises: a second receiving component **224** connected with the first receiving component **222** and configured to receive at least one changing operation on the internet address in the internet range allowed to be accessed that are provided by the monitoring user, wherein the at least one changing operation may comprise at least one of the following: an add operation, a update operation, and a delete operation; and a updating component **226** connected with the second receiving component **224** and configured to update the internet range allowed to be accessed according to the at least one update operation.

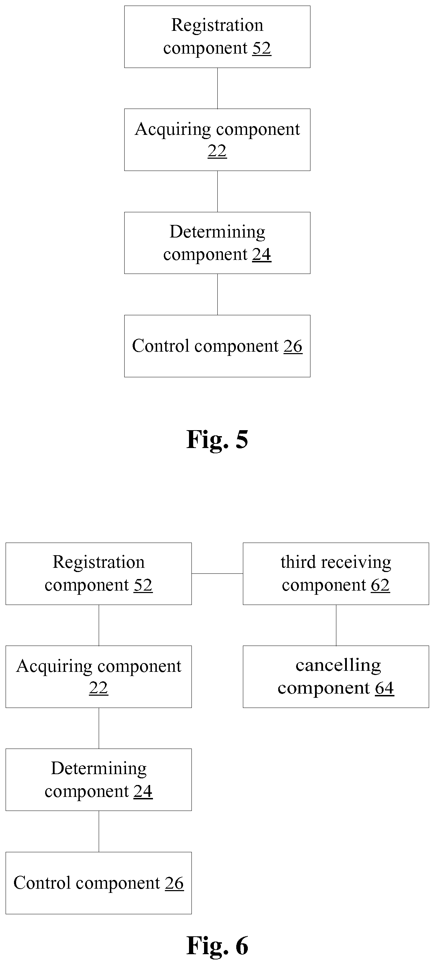

Fig. 5 is a first preferred structural block diagram of the device for controlling an internet access according to an embodiment of the present invention, and as shown in Fig. 5, the device may also comprise: a registration component **52** connected with the acquiring component **22** and configured to establish a monitoring relationship between the monitoring user and the monitored user.

Fig. 6 is a second preferred structural block diagram of a device for controlling an internet access according to an embodiment of the present invention, and as shown in Fig. 6, the device may further comprise: a third receiving component **62** connected with the registration component **52** and configured to receive a request for cancelling the monitoring relationship provided by the monitoring user; and a cancelling component **64** connected with the third receiving component **62** and configured to cancel the monitoring relationship according to the request for cancelling the monitoring relationship, and to delete the internet range allowed to be accessed.

A detailed description is given to the preferred embodiments of the invention. The following preferred embodiments are in conjunction with the above embodiments and their preferred implementations.

In the following preferred embodiments, the monitoring of the range of the internet websites accessible to a cell phone terminal is taken as an example. A method and system for controlling a cell phone terminal to access an internet on the network side is provided by modifying and enhancing the established WAP gateways of an operator. Through this method and system, the blank of lacking means for effective monitoring of network accessing of a mobile terminal and even more lacking the mode for effectively and being able to control the access of a user to the internet from the network side of an operator in the related art is filled in.

A method for controlling a cell phone terminal to access an internet provided by the preferred embodiments comprises: a monitoring user provisions a service function via message, WEB, USSD, IVR etc., the data of a monitored user is set and an internet range that the monitored user may access via a mobile terminal is controlled, thus ensuring that the monitored user can only access the websites that the monitoring user allows him or her to access when he or she initiates an access to the websites via WAP using a cell phone terminal.

Corresponding to the above method for controlling the cell phone terminal access the internet, a system provided in the preferred embodiment below comprises: an information parsing component (which implements the functions of the above first receiving component **222,** second receiving component **224** and third receiving component **62**), a monitoring managing component (which implements the functions of the above updating component **226,** registration component **52** and cancelling component **64**), a data storage component and a WAP control component (which implements the functions of the above acquiring component **22,** determining component **24** and control component **26**). At least one request operation, which includes service provisioning, service cancelling, maintaining monitoring relationship and maintaining accessible URL list and is from the monitoring user, is received and the type of the at least one operation is parsed by the information parsing component, the type of the at least operation is transmitted to the monitoring managing component for logical processing, and the result data of the corresponding operation is submitted by the monitoring managing component to a cache unit of the data storage component, and then the result data are refreshed by the cache unit into a database to implement data persistence. Finally, the WAP control component performs monitoring control according to the data when a user accesses a website via WAP using a cell phone.

The system controls the access of the monitored user to the internet using a cell phone terminal by enabling the monitoring user provision the function of the system to ensure that the monitored user may only access the websites that the monitoring user allows him or her to access using the cell phone terminal when he or she initiates an access to the internet via WAP gateway.

The system enables the monitoring user to provision or cancel the service in multiple ways such as text message, WEB, USSD and IVR. Once provisioning the function of the system, one may be a monitoring user. After the service is provisioned, the system will inform the monitoring user of the provisioning information via text message.

After the monitoring user provisions the function corresponding to the system, the MSISDN of the monitored user is provided to the system in self-help ways such as text message, WEB, USSD and IVR. For the self-help submitting, the system may further establish the monitoring relationship between the monitoring user and the monitored user after getting the approval from the monitored user. Meanwhile, the monitoring user may add multiple monitored users continuously and may modify or delete the existing monitored users.

When the monitoring relationship is set, it is checked whether the MSISDN of the monitored cell phone provided by the monitoring user has been a monitoring user or monitored by others in the system, if the MSISDN has been a monitoring user or monitored user in other monitoring relationship, it may be refused to be added into a new monitoring relationship.

The monitoring user may provide a list of the internet URL addresses allowed to be accessed by the monitored user to the system for monitoring the monitored user by the system. The monitored user may only access the websites comprised in the above list of the URL addresses. Meanwhile, the monitoring user may added an URL address to the list of the internet URL addresses allowed to be accessed by the monitored user to the system. One of URL addresses in the list of the internet URL addresses allowed to be accessed by the monitored user may be modified or deleted.

During the normal running of the system, if a user initiates an internet access request, the system will check whether the user is monitored first. If it is a monitored MSISDN, it is checked whether an internet URL address accessed is in the list of the URL addresses allowed to be accessed. If it is in the list of the addresses allowed to be accessed, the user is allowed to access the URL address by the system.

The system also provides a function for cancelling a monitoring relationship, that is, the monitoring user cancels provisioning the function of the system and stops monitoring the monitored user by self-service ways such as text message, WEB, USSD or IVR. The monitoring relationship established and the list of the URL addresses are deleted. The MSISDN of the originally monitored user restores to a normal cell phone number. After successful cancelling, the system may inform the monitoring user of a fact that the monitoring relationship has been cancelled via a text message.

### First Embodiment

In a preferred embodiment, a method and system for controlling a cell phone terminal to access an internet is provided. A monitoring user controls the internet range to be accessed by a monitored user via a cell phone terminal, thus ensuring that the monitored user may only access the websites that the monitoring user allows him or her to access using the cell phone terminal when he or she initiates an access to the internet via WAP gateway. The system enables the monitoring user to provision or cancel services in multiple ways such as text message, WEB, USSD and IVR. After provisioning the service, the monitoring user may further set a monitoring relationship, and set at least one website address allowed to be accessed by the monitored user.

Preferably, a cell phone user may become a monitoring user after provisioning the functions of the system.

Preferably, the monitoring user may provision the function corresponding to the system in self-help ways such as text message, WEB, USSD or IVR, or through business hall to become a monitoring user.

Preferably, the monitoring user may establish a monitoring relationship between the monitoring user and the monitored user by providing the MSISDN of the monitored cell phone to the system.

Preferably, the monitoring user may provide the MSISDN of the monitored cell phone to the system in self-help ways such as text message, WEB, USSD or IVR. The user using the MSISDN is the monitored user, and the monitoring relationship between the monitoring user and the monitored user may be established. One monitoring user may monitor a plurality of MSISDNs.

Preferably, when the monitoring user provides the MSISDN of the monitored user to the system in self-help ways, in order to protect the rights of an individual user, the system will be allowed to establish the monitoring relationship after getting an approval from the individual user (candidate monitored user) and then the monitored cell phone may be monitored.

Preferably, if the approval from the individual user is required, the system may send a confirmation message to inform a candidate monitored user. Upon replying to approve to establish the monitoring relationship, the candidate monitored user may be monitored, and meanwhile, the system will send an inform message via a text message to the monitoring user to inform him or her that the monitoring relationship has been established.

Preferably, after establishing the monitoring relationship, the system may send an inform message to the monitoring user to inform him or her that the monitoring relationship with the MSISDN of the monitored user has been established.

Preferably, the system will check whether the MSISDN of the monitored user provided by the monitoring user has been a monitoring user or monitored by others, if the MSISDN has been a monitoring user or monitored user in other monitoring relationship, it cannot be allowed to be added into a new monitoring relationship.

Preferably, the monitoring user may add an MSISDN to be as a monitored user, and may modify or delete the existing MSISDN of the cell phone that has been monitored by the monitoring user. When the MSISDN is modified, if the MSISDN has been a monitoring user or monitored user in other monitoring relationship, it is likewise not allowed to be added in a new monitoring relationship.

Preferably, the monitoring user provide the list of the internet URL addresses allowed to be accessed by the monitored user to the system for monitoring the monitored user by the system. The monitored user will be allowed to access the websites comprised in the above list of the URL addresses.

Preferably, the monitoring user may provide the list of the internet URL addresses allowed to be accessed by the monitored user to the system in self-help ways such as text message, WEB, USSD or IVR.

Preferably, the monitoring user may add an URL address to the list of the internet URL addresses allowed to be accessed by the monitored user to the system, and the monitored user may only access the websites comprised in the above list of the URL addresses.

Preferably, the monitoring user may modify the existing list of the URL addresses allowed to be accessed by the monitored user. After a modify operation is completed, the monitored user may only access the websites comprised in the updated list of URL addresses.

Preferably, the monitoring user may request the system to delete an URL address that has been listed in the list of the internet URL addresses allowed to be accessed by the monitored user.

Preferably, when a user initiates an internet access via a cell phone, the system will check whether the user is monitored first. If the cell phone is a monitored MSISDN, it is checked whether an internet addresses to be accessed is in the list of the URL addresses allowed to be accessed. If it is in the list of the URL addresses allowed to be accessed, the user is allowed to access the internet address by the system, otherwise the access is refused.

Preferably, the system may further check in priority whether a provisioning relationship of the monitoring user is valid, and will make a further check if it is valid.

Preferably, the user may cancel provisioning the function corresponding to the system, and stops monitor the monitored user.

Preferably, the monitoring user may cancel provisioning the function corresponding to the system and give up the identity of the monitoring user in ways such as text message, WEB, USSD or IVR.

Preferably, when the monitoring user cancels provisioning the function corresponding the system, the system will inquire first whether the user is in a valid monitoring relationship, if no, the monitoring user may be informed of the fact via a text message.

Preferably, after the monitoring user cancels provisioning the function corresponding to the system and quit the identity of the monitoring user, the system will dismiss the monitoring relationship between the monitoring user and the monitored user and delete the list of the monitored URL addresses at the same time.

Preferably, after the monitoring user cancels provisioning the function corresponding to the system and give up the identity of the monitoring user, the system may inform the monitoring user of the fact via a text message.

### Embodiment 2

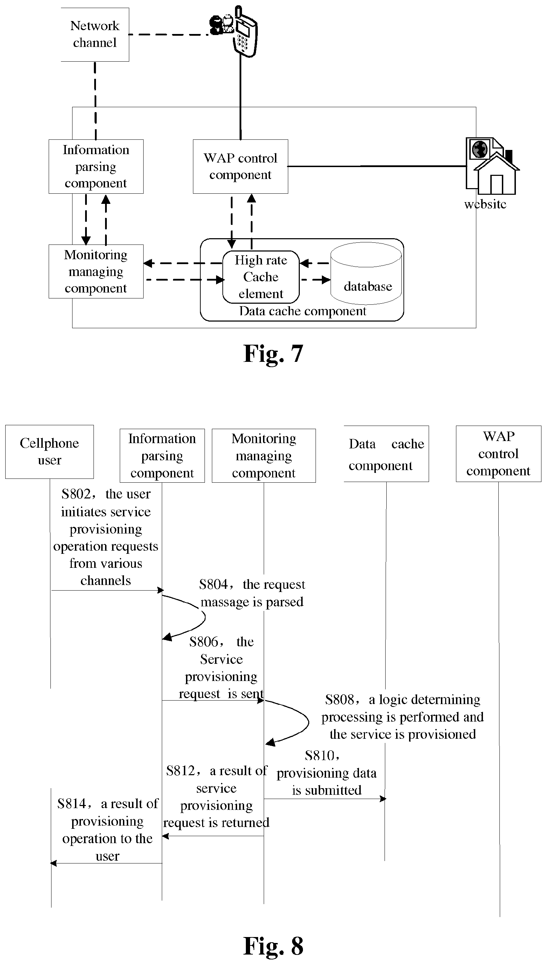

Fig. 7 is a schematic diagram of a system for controlling a cell phone terminal to access an internet according to a second embodiment of the present invention, and as shown in Fig. 7, the system mainly comprises: an information parsing component, a monitoring managing component, a WAP control component, and a data storage component. The above four components completes controlling the cell phone terminal to access the internet. The data storage component may comprise a cache unit and a database.

The information parsing component is responsible for receiving an operation request message, which includes service provisioning, service cancelling, maintaining monitoring relationship and maintaining website list and is initiated by an CRM system, in self-service ways such as text message, WEB portal, USSD or IVR, or through the business hall of the operator, and for parsing the operation request message and outputting the parsed data to the monitoring managing component.

The monitoring managing component is responsible for receiving the operation request message acquired from the information parsing component, performing an operation including service provisioning, services cancelling, maintaining monitoring relationship or maintaining website list according to the operation type of the operation request message, and writing the above data in the cache component.

The WAP control component is configured to: when the user access a website via WAP using a cell phone terminal, acquire the user information from the cache component, and then determine whether the monitoring relationship and the website URL address fall within the accessible range according to the information. For example, if the monitoring relationship does not exist, the user is allowed to access the website; if the monitoring relationship exists, it is determined whether the monitoring relationship is legal, if not, the user is allowed to access, otherwise, it is determined whether the user is the monitored user. If the user is not the monitored user, that is, the user is the monitoring user, and the user is allowed to access the website. If the user is the monitored user, then it is determined whether the website URL address accessed fall in the allowed range. If yes, the user is allowed to access the website, otherwise, the access is not allowed.

The data cache component comprising a cache element and a database is configured to save and monitor relevant data. The cache element is configured to improve the performance of data access and maintenance performed by the monitoring managing component and the WAP control component.

Based on the above system, Fig. 8 is a flowchart of the service provisioning in a method for controlling an internet access via the cell phone terminal according to a second embodiment of the present invention, and as shown in Fig. 8, the service provisioning process may comprise the following steps.

Step S802, a user initiates a service provisioning request in a way such as text message, WEB portal, USSD and IVR or through a business hall of the operator, and the service provisioning request message is routed to the information parsing component.

Step S804, the information parsing component analyses the service provisioning request message to determine the service provisioning request message is for requesting a services provisioning.

Step S806, the information parsing component forwards the service provisioning request message to the monitoring managing component.

Step S808, after receiving the service provisioning request message, the monitoring managing component checks whether an MSISDN of the monitored cell phone provided by the monitoring user is corresponding to a monitoring user or is monitored by others. If the MSISDN is corresponding to a monitoring user or is a monitored user in other monitoring relationship, it is not allowed to be added into a new monitoring relationship, and the request for service provisioning is refused; and if it is determined that the MSISDN of the monitored cell phone is provided in self-help way, that is, the system send a confirmation message to the monitored cell phone, the monitoring relationship is allowed to be established after the monitored cell phone replies approval via a text message, and the monitored cell phone is in the monitored range.

Step S810, the monitoring managing component writes data to the data storage component and storages the monitoring relationship.

Step S812, the monitoring managing component returns a result of the service provisioning request to the information parsing component.

Step S814, the information parsing component sends a message for notifying a result of service provisioning to the monitoring user.

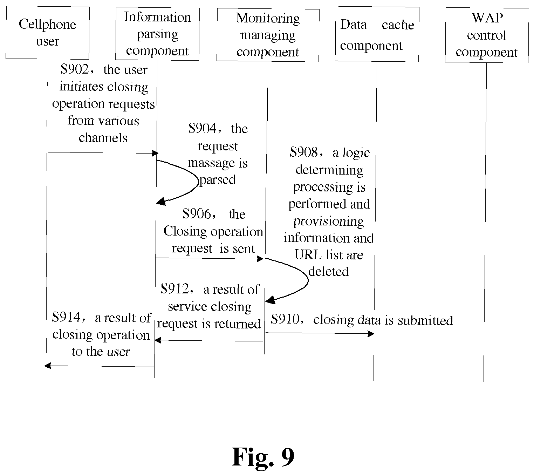

Based on the above system, Fig. 9 is a flowchart of service cancellation in a method for controlling an internet access via a cell phone terminal according to a second embodiment of the present invention, and as shown in Fig. 9, the service cancellation process may comprise the following steps.

Step S902, the user initiates a service cancellation request in a way such as a text message, WEB portal, USSD and IVR or through a business hall of the operator, and the service cancellation request is routed to the information parsing component.

Step S904, the information parsing component analyses the service cancellation request to determine the service cancellation request is a request for cancelling a service.

Step S906, the information parsing component forwards the service cancellation request to the monitoring managing component.

Step S908, after receiving the service cancellation request, the monitoring managing component inquires whether the user is in a valid monitoring relationship. If the user is not in the valid monitoring relationship, the user is informed a fact that the user is not in the valid monitoring relationship via a text message. If the user is in the valid monitoring relationship, the monitoring relationship between the monitoring user and the monitored user is cancelled and the list of the monitored URL addresses is deleted.

Step S910, the monitoring managing component writes data to the data storage component and saves the monitoring relationship.

Step S912, the monitoring managing component returns a result of the service cancellation to the information parsing component.

Step S914, the information parsing component sends a message for notifying a result of service cancellation to the monitoring user.

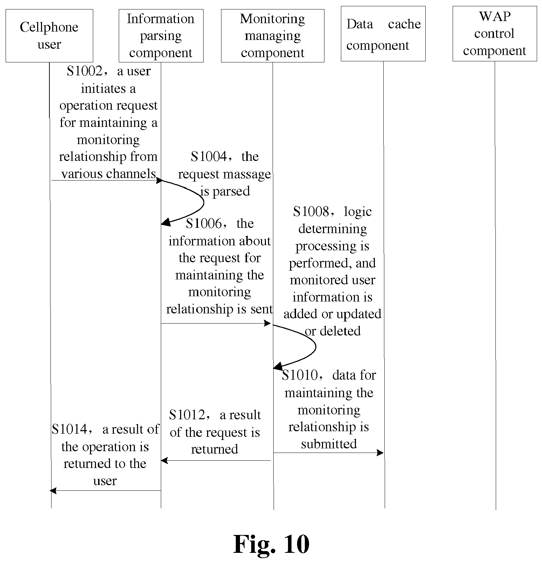

Based on the above system, Fig. 10 is a flowchart of maintaining a monitoring relationship by a system in the method for controlling the internet access via the cell phone terminal according to the second embodiment of the present invention. As shown in Fig. 10, the monitoring relationship maintaining process may comprise the following steps.

Step S1002, the user initiates a request for maintaining a monitoring relationship in a way such as a text message, WEB portal, USSD and IVR or through a business hall of the operator, and a message carrying the request for maintaining the monitoring relationship is routed to the information parsing component.

Step S1004, the information parsing component analyses the message carrying the request for maintaining the monitoring relationship to determine the message carries the request for maintaining the monitoring relationship, and determine it is an operation of adding a monitoring relationship, or updating and deleting an existing monitoring relationship.

Step S1006, the information parsing component forwards the request for maintaining the monitoring relationship to the monitoring managing component.

Step S1008, after receiving the request for maintaining the monitoring relationship, the monitoring managing component performs an operation according to the operation of adding a monitoring relationship, or updating and deleting the existing monitoring relationship. If the operation is to add or update a monitoring relationship, the system checks whether an MSISDN of the monitored user provided by the monitoring user is corresponding to a monitoring user or is monitored by others. If yes, it cannot be allowed to be added into a new monitoring relationship, and the operation fails. If the operation is to delete a monitoring relationship and the MSISDN of the monitored user does not exist, the operation fails.

Step S 1010, the monitoring managing component submit to the data storage component to a piece of monitoring relationship data added, updated or deleted.

Step S1012, the monitoring managing component returns a result of the request for maintaining the monitoring relationship to the information parsing component.

Step S1014, the information parsing component sends a message for notifying a result of maintaining the monitoring relationship to the monitoring user.

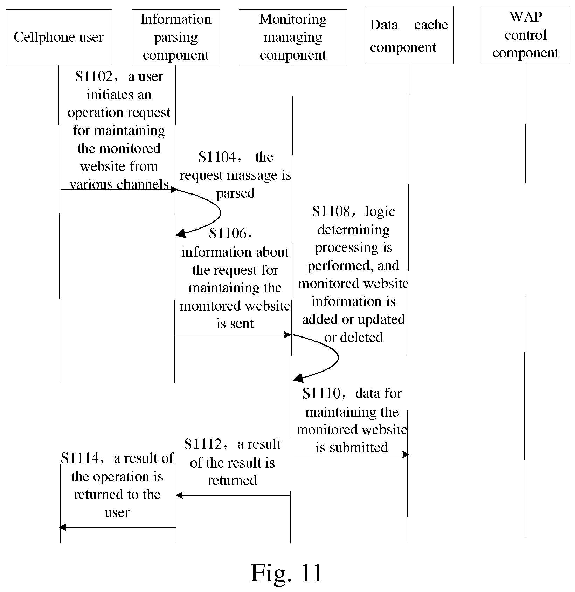

Based on the above system, Fig. 11 is a flowchart of maintaining websites accessible to a monitored user by a system in the method for controlling a cell phone terminal to access an internet according to a second embodiment of the present invention. As shown in Fig. 11, the website maintaining process may comprise the following steps.

Step S1102, the user initiates a request for maintaining websites accessible to the monitored user in a way such as a text message, WEB portal, USSD and IVR or through a business hall of the operator, and a maintaining request message is routed to the information parsing component.

Step S1104, the information parsing component analyses the maintaining request message to determine the maintaining request message carries the request for maintaining the websites accessible to the monitored user, and determines it is an operation of adding an accessible website URL address, or updating and deleting an existing accessible website URL address.

Step S1106, the information parsing component forwards the maintaining request to the monitoring managing component.

Step S1108, after receiving the maintaining request, the monitoring managing component performs a corresponding data logical processing according to the operation of adding an accessible website URL address, or updating and deleting an existing accessible website URL address.

Step S1110, the monitoring managing component submits an accessible website URL address added, updated or deleted.

Step S1112, the monitoring managing component returns a result of the request for maintaining the websites accessible to the monitored user to the information parsing component.

Step S1114, the information parsing component sends a message for notifying a result of the websites accessible to the monitored user to the monitoring user.

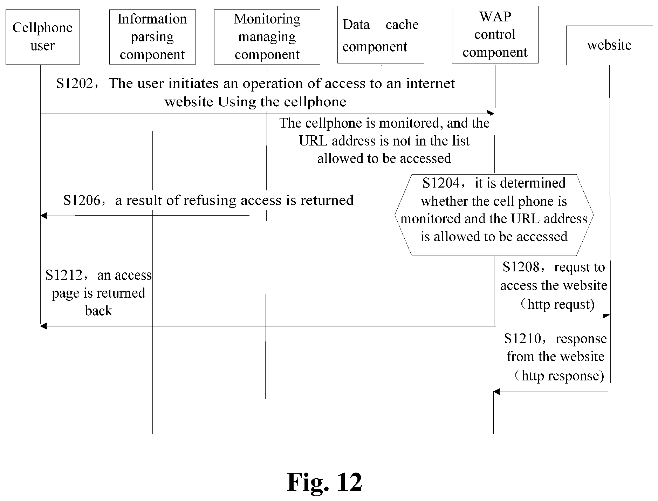

Based on the above system, Fig. 12 is a flowchart of system monitoring in a method for controlling a cell phone terminal to access an internet according to a second embodiment of the present invention. As shown in Fig. 12, the system monitoring process may comprise the following steps.

Step S1202, the user initiates an operation of access to an internet website, wherein the operation is sent to a WAP gateway via a wireless network.

Step S1204, the control component of the WAP gateway determines whether a cell phone number requesting access to the website is monitored and whether the website URL address is allowed to be accessed. If the website URL address is not allowed to be accessed, turn to S1206. If the website URL address is allowed to be accessed (not the monitored user, or the website URL address is in the URL address range allowed to be accessed), turn to S1208.

Step S1206, the control component of the WAP gateway returns a result of refusing access to the user terminal.

Step S1208, the WAP gateway initiates an access to the website.

Step S1210, the website returns a web page.

Step S1212, the website returns the web page to the monitored user.

To sum up, the embodiment provides a method and system for controlling a cell phone terminal to access an internet, the method and the system are based on an established WAP gateway of an operator and carry out function expansion and improvement to the WAP gateway to achieve the effect of effectively controlling, on the network side, the cell phone terminal to access the internet. The problem of opening limited internet access range to a part of population is solved. Meanwhile, the method and the system it involves provide a variety of channels such as text message, WEB, USSD and IVR to facilitate a user to choose the most convenient way to provision the service functions provided by the system and maintain data such as the monitoring relationship. Moreover, the method and the system it involves improve the performance of monitoring the access of the user to a website via WAP, and the user experience by providing a cache function.

In another embodiment, software is also provided. The software is used to implement the technical solutions described in the above embodiments and the preferred embodiments.
In another embodiment, a storage medium is also provided. The storage medium stores the above software. The storage medium includes, but not limited to, an optical disk, a floppy disk, a hard disk, and an erasable memory etc.
Apparently, those skilled in the art shall understand that the above components and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit component respectively, or a plurality of components or steps thereof are made into one integrated circuit component. In this way, the present invention is not restricted to any particular hardware and software combination.
The above description is only preferred embodiments of the present invention and is not intended to limit the present invention, and the present invention can have a variety of changes and modifications for ordinary person skilled in the art. Any modification, equivalent replacement, or improvement shall all fall within the protection scope of the present invention.

### Industrial Applicability

Through the technical solutions provided by the present invention, after acquiring an internet range allowed to be accessed by a monitored user using a mobile terminal, the network side will determine whether an internet address to be accessed by the monitored user falls within the above internet range allowed to be accessed, and if not, refuses the access of the monitored user to the internet address, thereby achieve control over the internet range accessed by the monitored user and improving the monitoring capability and expanding the type of the network side.

## Claims

1. A method for controlling an internet access, comprising:
a WAP gateway acquiring an internet range allowed to be accessed by a monitored user using a mobile terminal (S102);
the WAP gateway determining whether an internet address to be accessed by the monitored user falls within the internet range allowed to be accessed (S104); and
based on that the internet address to be accessed by the monitored user does not fall within the internet range allowed to be accessed, the WAP gateway refusing an access of the monitored user to the internet address (S106);
the communication between the WAP gateway and a monitoring user and/or the communication between the WAP gateway and the monitored user is implemented by means of one of the following: a text message, Web page, Unstructured Supplementary Service Data, USSD, and Interactive Voice Response ,IVR;
wherein acquiring the internet range allowed to be accessed by the monitored user using the mobile terminal (S102) comprises:
receiving the internet range allowed to be accessed by the monitored user, wherein the internet range allowed to be accessed by the monitored user is provided by a monitoring user corresponding to the monitored user;
**characterized in that**
in the case where there are multiple monitoring users corresponding to the monitored user, after receiving multiple internet ranges allowed to be accessed by the monitored user that is provided by the multiple monitoring users corresponding to the monitored user, the method further comprises:
merging the multiple internet ranges allowed to be accessed that are provided by the multiple monitoring users.

2. The method according to claim 1, **characterized in that** determining whether the internet address to be accessed by the monitored user falls within the internet range allowed to be accessed (S104) comprises:
determining whether the internet address exists in a list of internet addresses allowed to be accessed by the monitored user;
based on that the internet address exists in the list of the internet addresses allowed to be accessed by the monitored user, determining the internet address falls in the internet range allowed to be accessed; and
based on that the internet address does not exist in the list of the internet addresses allowed to be accessed by the monitored user, determining the internet address does not fall within the internet range allowed to be accessed.

3. The method according to claim 1, **characterized in that** after receiving the internet range allowed to be accessed by the monitored user that is provided by the monitoring user corresponding to the monitored user, the method further comprises:
receiving at least one changing operation on an internet address in the internet range allowed to be accessed that is provided by the monitoring user, wherein the at least one changing operation comprises at least one of the following: an add operation, a update operation, and a delete operation; and
updating the internet range allowed to be accessed according to the at least one changing operation.

4. The method according to any one of claims 1 or 3, **characterized in that** before receiving the internet range allowed to be accessed by the monitored user that is provided by the monitoring user corresponding to the monitored user, the method further comprises:
establishing a monitoring relationship between the monitoring user and the monitored user.

5. The method according to claim 4, **characterized in that** establishing the monitoring relationship between the monitoring user and the monitored user comprises:
receiving a monitoring request provided by the monitoring user, the monitoring request carrying an identification of the monitored user; and
establishing the monitoring relationship between the monitoring user and the monitored user according to the identification.

6. The method according to claim 5, **characterized in that** before the monitoring relationship between the monitoring user and the monitored user is established according to the identification, the method further comprises:
determining whether a user corresponding to the identification is in a valid monitoring relationship; and
based on that the user corresponding to the identification is in the valid monitoring relationship, refusing the monitoring request.

7. The method according to claim 6, **characterized in that** in the case where determining the identification of the monitored user is not in the valid monitoring relationship, the method further comprises:
sending a confirmation request to the monitored user, the confirmation request being used by the monitored user to confirm the monitoring relationship; and
receiving a response message in response to the confirmation request from the monitored user, the response message carrying indication information that the monitored user agrees to establish the monitoring relationship.

8. The method according to any one of claims 5 to 7, **characterized in that** the identification of the monitored user is Mobile Station International Integrated Services Digital Number, MSISDN, of the monitored user, and/or an identification of a Subscriber Identity Component, SIM, card corresponding to the monitored user.

9. The method according to any one of claims 4 to 8, **characterized in that** after the monitoring relationship between the monitoring user and the monitored user is established, the method further comprises:
receiving a request for cancelling the monitoring relationship, wherein the request is provided by the monitoring user; and
cancelling the monitoring relationship according to the request for cancelling the monitoring relationship, and deleting the internet range allowed to be accessed.

10. The method according to claim 9, **characterized in that** cancelling the monitoring relationship according to the request for cancelling the monitoring relationship comprises:
determining whether the monitoring user is in the valid monitoring relationship;
based on that the monitoring user is in the valid monitoring relationship, cancelling the monitoring relationship according to the request for cancelling the monitoring relationship; and
based on that the monitoring user is not in the valid monitoring relationship, ignoring the request for cancelling the monitoring relationship.

11. The method according to any one of claims 4 to 10, **characterized in that** after the monitoring relationship between the monitoring user and the monitored user is established, the method further comprises:
establishing a monitoring relationship between the monitoring user and other monitored users.

12. A device for controlling internet access, which is provided on a WAP server, comprising:
an acquiring component (22) configured to acquire an internet range allowed to be accessed by a monitored user using a mobile terminal;
a determining component (24) configured to determine whether an internet address to be accessed by the monitored user falls within the internet range allowed to be accessed; and
a control component (26) configured to refuse an access of the monitored user to the internet address in the case where a determining result of the determining component is no;
the communication between the WAP gateway and a monitoring user and/or the communication between the WAP gateway and the monitored user is implemented by means of one of the following: a text message, Web page, Unstructured Supplementary Service Data, USSD, and Interactive Voice Response ,IVR;
wherein the acquiring component (22) comprises:
a first receiving component (222) configured to receive the internet range allowed to be accessed by the monitored user that is provided by a monitoring user corresponding to the monitored user; and **characterized in that**
in the case where there are multiple monitoring users corresponding to the monitored user, the multiple internet ranges allowed to be accessed that are provided by the multiple monitoring users are merged.

13. The device according to claim 12, **characterized in that** the acquiring component (22) further comprises:
a second receiving component (224) configured to receive at least one changing operation on an internet address in the internet range allowed to be accessed that are provided by the monitoring user, wherein the at least one changing operation comprises at least one of the following: an add operation, an update operation, and a delete operation; and
an updating component (226) configured to update the internet range allowed to be accessed according to the at least one changing operation.

14. The device according to claim 13, **characterized in that** the device further comprises:
a registration component (52) configured to establish a monitoring relationship between the monitoring user and the monitored user,
where preferably, the device further comprises:
a third receiving component (62) configured to receive a request for cancelling the monitoring relationship, wherein the request is provided by the monitoring user; and
a cancelling component (64) configured to cancel the monitoring relationship according to the request for cancelling the monitoring relationship, and delete the internet range allowed to be accessed.

## Patentansprüche

1. Verfahren zum Steuern eines Internetzugriffs, umfassend:
Erfassen, durch ein WAP-Gateway, eines Internetspektrums, auf das es einem überwachten Benutzer, der ein mobiles Endgerät verwendet, gestattet ist, zuzugreifen (S102);
Bestimmen, durch das WAP-Gateway, ob eine Internetadresse, auf die vom überwachten Benutzer zugegriffen werden soll, in das Internetspektrum fällt, auf das es gestattet ist, zuzugreifen (S104); und
basierend darauf, dass die Internetadresse, auf die vom überwachten Benutzer zugegriffen werden soll, nicht in das Internetspektrum fällt, auf das es gestattet ist, zuzugreifen, Zurückweisen, durch das WAP-Gateway, eines Zugriffs des überwachten Benutzers auf die Internetadresse (S106);
die Kommunikation zwischen dem WAP-Gateway und einem überwachenden Benutzer und/oder die Kommunikation zwischen dem WAP-Gateway und dem überwachten Benutzer mittels einem aus den Folgenden implementiert ist: einer Textnachricht, Webseite, Unstructured Supplementary Service Data, USSD, und Interactive Voice Response, IVR;
wobei das Erfassen des Internetspektrums, auf das es dem überwachten Benutzer, der ein mobiles Endgerät verwendet, gestattet ist, zuzugreifen (S102), umfasst:
Empfangen des Internetspektrums, auf das es dem überwachten Benutzer gestattet ist, zuzugreifen, wobei das Internetspektrum, auf das es dem überwachten Benutzer gestattet ist, zuzugreifen, von einem überwachenden Benutzer bereitgestellt wird, der dem überwachten Benutzer entspricht;
**dadurch gekennzeichnet, dass**
in dem Fall, in dem es mehrere überwachende Benutzer gibt, die dem überwachten Benutzer entsprechen, das Verfahren nach Empfangen von mehreren Internetspektren, auf die es dem überwachten Benutzer gestattet ist, zuzugreifen, die von den mehreren, dem überwachten Benutzer entsprechenden überwachenden Benutzern bereitgestellt werden, weiter umfasst:
Zusammenfassen der mehreren Internetspektren, auf die es gestattet ist, zuzugreifen, die von den mehreren überwachenden Benutzern bereitgestellt werden.

2. Verfahren nach Anspruch 1, **dadurch gekennzeichnet, dass** das Bestimmen, ob die Internetadresse, auf die vom überwachten Benutzer zugegriffen werden soll, in das Internetspektrum fällt, auf das es gestattet ist, zuzugreifen (S104) umfasst:
Bestimmen, ob die Internetadresse in einer Liste von Internetadressen existiert, auf die es dem überwachten Benutzer gestattet ist, zuzugreifen;
basierend darauf, dass die Internetadresse in der List von Internetadressen existiert, auf die es dem überwachten Benutzer gestattet ist, zuzugreifen, Bestimmen, dass die Internetadresse in das Internetspektrum fällt, auf die es gestattet ist, zuzugreifen; und
basierend darauf, dass die Internetadresse nicht in der Liste der Internetadressen existiert, auf die es dem überwachten Benutzer gestattet ist, zuzugreifen, Bestimmen, dass die Internetadresse nicht in das Internetspektrum fällt, auf das es gestattet ist, zuzugreifen.

3. Verfahren nach Anspruch 1, **dadurch gekennzeichnet, dass** nach dem Empfangen des Internetspektrums, auf das es dem überwachten Benutzer gestattet ist, zuzugreifen, das von dem überwachenden Benutzer bereitgestellt wird, der dem überwachten Benutzer entspricht, das Verfahren weiter umfasst:
Empfangen von mindestens einem Änderungsvorgang an einer Internetadresse in dem Internetspektrum, auf das es gestattet ist, zuzugreifen, der vom überwachenden Benutzer bereitgestellt wird, wobei der mindestens eine Änderungsvorgang mindestens eines aus den Folgenden umfasst: einen Hinzufügevorgang, einen Aktualisierungsvorgang und einen Löschvorgang; und
Aktualisieren des Internetspektrums, auf das es gestattet ist, zuzugreifen, gemäß dem mindestens einen Änderungsvorgang.

4. Verfahren nach einem der Ansprüche 1 oder 3, **dadurch gekennzeichnet, dass** vor dem Empfangen des Internetspektrums, auf das es dem überwachten Benutzer gestattet ist, zuzugreifen, das von dem überwachenden Benutzer bereitgestellt wird, der dem überwachten Benutzer entspricht, das Verfahren weiter umfasst:
Herstellen einer Überwachungsbeziehung zwischen dem überwachenden Benutzer und dem überwachten Benutzer.

5. Verfahren nach Anspruch 4, **dadurch gekennzeichnet, dass** das Herstellen der Überwachungsbeziehung zwischen dem überwachenden Benutzer und dem überwachten Benutzer umfasst:
Empfangen einer Überwachungsanfrage, die vom überwachenden Benutzer bereitgestellt wird, wobei die Überwachungsanfrage eine Identifikation des überwachten Benutzers übermittelt; und
Herstellen der Überwachungsbeziehung zwischen dem überwachenden Benutzer und dem überwachten Benutzer gemäß der Identifikation.

6. Verfahren nach Anspruch 5, **dadurch gekennzeichnet, dass** bevor die Überwachungsbeziehung zwischen dem überwachenden Benutzer und dem überwachten Benutzer gemäß der Identifikation hergestellt wird, das Verfahren weiter umfasst:
Bestimmen, ob sich ein Benutzer, der der Identifikation entspricht, in einer gültigen Überwachungsbeziehung befindet; und
basierend darauf, dass sich der Benutzer, der der Identifikation entspricht, in der gültigen Überwachungsbeziehung befindet, Zurückweisen der Überwachungsanfrage.

7. Verfahren nach Anspruch 6, **dadurch gekennzeichnet, dass** in dem Fall, in dem bestimmt wird, dass sich die Identifikation des überwachten Benutzers nicht in der gültigen Überwachungsbeziehung befindet, das Verfahren weiter umfasst:
Senden einer Bestätigungsanfrage an den überwachten Benutzer, wobei die Bestätigungsanfrage vom überwachten Benutzer verwendet wird, um die Überwachungsbeziehung zu bestätigen; und
Empfangen einer Antwortnachricht vom überwachten Benutzer in Antwort auf die Bestätigungsanfrage, wobei die Antwortnachricht Hinweisinformationen übermittelt, dass der überwachte Benutzer dazu einwilligt, die Überwachungsbeziehung herzustellen.

8. Verfahren nach einem der Ansprüche 5 bis 7, **dadurch gekennzeichnet, dass** die Identifikation des überwachten Benutzers eine Mobile Station International Integrated Services Digital Number, MSISDN, des überwachten Benutzers, und/oder eine Identifikation einer Subscriber Identity Component-, SIM, Karte ist, die dem überwachten Benutzer entspricht.

9. Verfahren nach einem der Ansprüche 4 bis 8, **dadurch gekennzeichnet, dass** nachdem die Überwachungsbeziehung zwischen dem überwachenden Benutzer und dem überwachten Benutzer hergestellt ist, das Verfahren weiter umfasst:
Empfangen einer Anfrage zum Aufheben der Überwachungsbeziehung, wobei die Anfrage vom überwachenden Benutzer bereitgestellt wird; und
Aufheben der Überwachungsbeziehung gemäß der Anfrage zum Aufheben der Überwachungsbeziehung, und Löschen des Internetspektrums, auf das es gestattet ist, zuzugreifen.

10. Verfahren nach Anspruch 9, **dadurch gekennzeichnet, dass** das Aufheben der Überwachungsbeziehung gemäß der Anfrage zum Aufheben der Überwachungsbeziehung umfasst:
Bestimmen, ob sich der überwachende Benutzer in der gültigen Überwachungsbeziehung befindet;
basierend darauf, dass sich der überwachende Benutzer in der gültigen Überwachungsbeziehung befindet, Aufheben der Überwachungsbeziehung gemäß der Anfrage zum Aufheben der Überwachungsbeziehung; und
basierend darauf, dass sich der überwachende Benutzer nicht in der gültigen Überwachungsbeziehung befindet, Ignorieren der Anfrage zum Aufheben der Überwachungsbeziehung.

11. Verfahren nach einem der Ansprüche 4 bis 10, **dadurch gekennzeichnet, dass** nachdem die Überwachungsbeziehung zwischen dem überwachenden Benutzer und dem überwachten Benutzer hergestellt ist, das Verfahren weiter umfasst:
Herstellen einer Überwachungsbeziehung zwischen dem überwachenden Benutzer und anderen überwachten Benutzern.

12. Vorrichtung zum Steuern von Internetzugriff, die auf einem WAP-Server bereitgestellt wird, umfassend:
eine Erfassungskomponente (22), die dazu konfiguriert ist, ein Internetspektrum zu erfassen, auf das es einem überwachten Benutzer, der ein mobiles Endgerät verwendet, gestattet ist, zuzugreifen;
eine Bestimmungskomponente (24), die dazu konfiguriert ist, zu bestimmen, ob eine Internetadresse, auf die vom überwachten Benutzer zugegriffen werden soll, in das Internetspektrum fällt, auf das es gestattet ist, zuzugreifen; und
eine Steuerkomponente (26), die dazu konfiguriert ist, einen Zugriff des überwachten Benutzers auf die Internetadresse in dem Fall zurückzuweisen, in dem ein Bestimmungsergebnis der Bestimmungskomponente Nein lautet;
die Kommunikation zwischen dem WAP-Gateway und einem überwachenden Benutzer und/oder die Kommunikation zwischen dem WAP-Gateway und dem überwachten Benutzer mittels einem aus den Folgenden implementiert ist: einer Textnachricht, Webseite, Unstructured Supplementary Service Data, USSD, und Interactive Voice Response, IVR;
wobei die Erfassungskomponente (22) umfasst:
eine erste Empfangskomponente (222), die dazu konfiguriert ist, das Internetspektrum zu empfangen, auf das es dem überwachten Benutzer gestattet ist, zuzugreifen, das von einem überwachenden Benutzer bereitgestellt wird, der dem überwachten Benutzer entspricht; und **dadurch gekennzeichnet, dass**
in dem Fall, in dem es mehrere überwachende Benutzer gibt, die dem überwachten Benutzer entsprechen, die mehreren Internetspektren, auf die es gestattet ist, zuzugreifen, die von den mehreren überwachenden Benutzern bereitgestellt werden, zusammengefasst werden.

13. Vorrichtung nach Anspruch 12, **dadurch gekennzeichnet, dass** die Erfassungskomponente (22) weiter umfasst:
eine zweite Empfangskomponente (224), die dazu konfiguriert ist, mindestens einen Änderungsvorgang an einer Internetadresse in dem Internetspektrum, auf das es gestattet ist, zuzugreifen, zu empfangen, der vom überwachenden Benutzer bereitgestellt wird, wobei der mindestens eine Änderungsvorgang mindestens eines aus den Folgenden umfasst: einen Hinzufügevorgang, einen Aktualisierungsvorgang und einen Löschvorgang; und
eine Aktualisierungskomponente (226), die dazu konfiguriert ist, das Internetspektrum, auf das es gestattet ist, zuzugreifen, gemäß dem mindestens einen Änderungsvorgang zu aktualisieren.

14. Vorrichtung nach Anspruch 13, **dadurch gekennzeichnet, dass** die Vorrichtung weiter umfasst:
eine Registrierungskomponente (52), die dazu konfiguriert ist, eine Überwachungsbeziehung zwischen dem überwachenden Benutzer und dem überwachten Benutzer herzustellen, wobei die Vorrichtung vorzugsweise weiter umfasst:
eine dritte Empfangskomponente (62), die dazu konfiguriert ist, eine Anfrage zum Aufheben der Überwachungsbeziehung zu empfangen, wobei die Anfrage vom überwachenden Benutzer bereitgestellt wird; und
eine Aufhebungskomponente (64), die dazu konfiguriert ist, die Überwachungsbeziehung gemäß der Anfrage zum Aufheben der Überwachungsbeziehung aufzuheben und das Internetspektrum, auf das es gestattet ist, zuzugreifen, zu löschen.

## Revendications

1. Procédé pour commander un accès Internet comprenant :
l'acquisition, par une passerelle WAP, d'une plage Internet à laquelle l'accès est autorisé pour un utilisateur surveillé utilisant un terminal mobile (S102) ;
le fait de déterminer, par la passerelle WAP, si une adresse Internet devant faire l'objet d'un accès par l'utilisateur surveillé se situe dans la plage Internet à laquelle l'accès est autorisé (S104) ; et
sur la base du fait que l'adresse Internet devant faire l'objet d'un accès par l'utilisateur surveillé ne se situe pas dans la plage Internet à laquelle l'accès est autorisé, le refus, par la passerelle WAP, d'un accès de l'utilisateur surveillé à l'adresse Internet (S106) ;
la communication entre la passerelle WAP et un utilisateur de surveillance et/ou la communication entre la passerelle WAP et un utilisateur surveillé est mise en oeuvre au moyen d'un de ce qui suit : un message de texte, une page Web, des données de services supplémentaires non structurées, USSD, et un système de réponse vocale interactif, IVR ;
dans lequel l'acquisition de la plage Internet à laquelle l'accès est autorisé pour l'utilisateur surveillé utilisant le terminal mobile (S102) comprend :
la réception de la plage Internet à laquelle l'accès est autorisé pour l'utilisateur surveillé, dans lequel la plage Internet à laquelle l'accès est autorisé pour l'utilisateur surveillé est fournie par un utilisateur de surveillance correspondant à l'utilisateur surveillé ;
**caractérisé en ce que**
dans le cas où il existe de multiples utilisateurs de surveillance correspondant à l'utilisateur surveillé, après la réception de multiples plages Internet auxquelles l'accès est autorisé pour l'utilisateur surveillé qui sont fournies par les multiples utilisateurs de surveillance correspondant à l'utilisateur surveillé, le procédé comprend en outre :
la fusion des multiples plages Internet auxquelles l'accès est autorisé qui sont fournies par les multiples utilisateurs de surveillance.

2. Procédé selon la revendication 1, **caractérisé en ce que** le fait de déterminer si l'adresse Internet devant faire l'objet d'un accès par l'utilisateur surveillé se situe dans la plage Internet à laquelle l'accès est autorisé (S104) comprend :
le fait de déterminer si l'adresse Internet existe dans une liste d'adresses Internet auxquelles l'accès est autorisé pour l'utilisateur surveillé ;
sur la base du fait que l'adresse Internet existe dans la liste des adresses Internet auxquelles l'accès est autorisé pour l'utilisateur surveillé, la détermination que l'adresse Internet se situe dans la plage Internet à laquelle l'accès est autorisé ; et
sur la base du fait que l'adresse Internet n'existe pas dans la liste des adresses Internet auxquelles l'accès est autorisé pour l'utilisateur surveillé, la détermination que l'adresse Internet ne se situe pas dans la plage Internet à laquelle l'accès est autorisé.

3. Procédé selon la revendication 1, **caractérisé en ce que**, après la réception de la plage Internet à laquelle l'accès est autorisé pour l'utilisateur surveillé qui est fournie par l'utilisateur de surveillance correspondant à l'utilisateur surveillé, le procédé comprend en outre :
la réception d'au moins une opération de changement sur une adresse Internet dans la plage Internet à laquelle l'accès est autorisé qui est fournie par l'utilisateur de surveillance, dans lequel l'au moins une opération de changement comprend au moins une de ce qui suit : une opération d'ajout, une opération de mise à jour et une opération de suppression ; et
la mise à jour de la plage Internet à laquelle l'accès est autorisé en fonction de l'au moins une opération de changement.

4. Procédé selon l'une quelconque des revendications 1 ou 3, **caractérisé en ce que**, avant la réception de la plage Internet à laquelle l'accès est autorisé pour l'utilisateur surveillé qui est fournie par l'utilisateur de surveillance correspondant à l'utilisateur surveillé, le procédé comprend en outre :
l'établissement d'une relation de surveillance entre l'utilisateur de surveillance et l'utilisateur surveillé.

5. Procédé selon la revendication 4, **caractérisé en ce que** l'établissement de la relation de surveillance entre l'utilisateur de surveillance et l'utilisateur surveillé comprend :
la réception d'une demande de surveillance fournie par l'utilisateur de surveillance, la demande de surveillance transportant une identification de l'utilisateur surveillé ; et
l'établissement de la relation de surveillance entre l'utilisateur de surveillance et l'utilisateur surveillé en fonction de l'identification.

6. Procédé selon la revendication 5, **caractérisé en ce que**, avant que la relation de surveillance entre l'utilisateur de surveillance et l'utilisateur surveillé soit établie en fonction de l'identification, le procédé comprend en outre :
le fait de déterminer si un utilisateur correspondant à l'identification est dans une relation de surveillance valide ; et
sur la base du fait que l'utilisateur correspondant à l'identification est dans la relation de surveillance valide, le refus de la demande de surveillance.

7. Procédé selon la revendication 6, **caractérisé en ce que**, dans le cas où la détermination de l'identification de l'utilisateur surveillé n'est pas dans la relation de surveillance valide, le procédé comprend en outre :
la transmission d'une demande de confirmation à l'utilisateur surveillé, la demande de confirmation étant utilisée par l'utilisateur surveillé pour confirmer la relation de surveillance ; et
la réception d'un message de réponse en réponse à la demande de confirmation provenant de l'utilisateur surveillé, le message de réponse transportant des informations d'indication que l'utilisateur surveillé accepte d'établir la relation de surveillance.

8. Procédé selon l'une quelconque des revendications 5 à 7, **caractérisé en ce que** l'identification de l'utilisateur surveillé est un numéro numérique de services intégrés international de station mobile, MSISDN, de l'utilisateur surveillé, et/ou une identification d'une carte de composant d'identité d'abonné, SIM, correspondant à l'utilisateur surveillé.

9. Procédé selon l'une quelconque des revendications 4 à 8, **caractérisé en ce que**, après que la relation de surveillance entre l'utilisateur de surveillance et l'utilisateur surveillé est établie, le procédé comprend en outre :
la réception d'une demande d'annulation de la relation de surveillance, dans lequel la demande est fournie par l'utilisateur de surveillance ; et
l'annulation de la relation de surveillance en fonction de la demande d'annulation de la relation de surveillance et la suppression de la plage Internet à laquelle l'accès est autorisé.

10. Procédé selon la revendication 9, **caractérisé en ce que** l'annulation de la relation de surveillance en fonction de la demande d'annulation de la relation de surveillance comprend :
le fait de déterminer si l'utilisateur de surveillance est dans la relation de surveillance valide ;
sur la base du fait que l'utilisateur de surveillance est dans la relation de surveillance valide, l'annulation de la relation de surveillance en fonction de la demande d'annulation de la relation de surveillance ; et
sur la base du fait que l'utilisateur de surveillance n'est pas dans la relation de surveillance valide, l'ignorance de la demande d'annulation de la relation de surveillance.

11. Procédé selon l'une quelconque des revendications 4 à 10, **caractérisé en ce que**, après que la relation de surveillance entre l'utilisateur de surveillance et l'utilisateur surveillé est établie, le procédé comprend en outre :
l'établissement d'une relation de surveillance entre l'utilisateur de surveillance et d'autres utilisateurs surveillés.

12. Dispositif de commande d'accès à Internet, qui est disposé sur un serveur WAP, comprenant :
un composant d'acquisition (22) configuré pour acquérir une plage Internet à laquelle l'accès est autorisé pour un utilisateur surveillé utilisant un terminal mobile ;
un composant de détermination (24) configuré pour déterminer si une adresse Internet devant faire l'objet d'un accès par l'utilisateur surveillé se situe dans la plage Internet à laquelle l'accès est autorisé ; et
un composant de commande (26) configuré pour refuser un accès de l'utilisateur surveillé à l'adresse Internet dans le cas où un résultat de détermination du composant de détermination est non ;
la communication entre la passerelle WAP et un utilisateur de surveillance et/ou la communication entre la passerelle WAP et l'utilisateur surveillé est mise en oeuvre au moyen d'un de ce qui suit : un message de texte, une page Web, des données de services supplémentaires non structurées, USSD, et un système de réponse vocale interactif, IVR ;
dans lequel le composant d'acquisition (22) comprend :
un premier composant de réception (222) configuré pour recevoir la plage Internet à laquelle l'accès est autorisé pour l'utilisateur surveillé qui est fournie par un utilisateur de surveillance correspondant à l'utilisateur surveillé ; et **caractérisé en ce que**
dans le cas où il existe de multiples utilisateurs de surveillance correspondant à l'utilisateur surveillé, les multiples plages Internet auxquelles l'accès est autorisé qui sont fournies par les multiples utilisateurs de surveillance sont fusionnées.

13. Dispositif selon la revendication 12, **caractérisé en ce que** le composant d'acquisition (22) comprend en outre :
un deuxième composant de réception (224) configuré pour recevoir au moins une opération de changement sur une adresse Internet dans la plage Internet à laquelle l'accès est autorisé qui est fournie par l'utilisateur de surveillance, dans lequel l'au moins une opération de changement comprend au moins une de ce qui suit : une opération d'ajout, une opération de mise à jour et une opération de suppression ; et
un composant de mise à jour (226) configuré pour mettre à jour la plage Internet à laquelle l'accès est autorisé en fonction de l'au moins une opération de changement.

14. Dispositif selon la revendication 13, **caractérisé en ce que** le dispositif comprend en outre :
un composant d'enregistrement (52) configuré pour établir une relation de surveillance entre l'utilisateur de surveillance et l'utilisateur surveillé, où de préférence, le dispositif comprend en outre :
un troisième composant de réception (62) configuré pour recevoir une demande d'annulation de la relation de surveillance, dans lequel la demande est fournie par l'utilisateur de surveillance ; et
un composant d'annulation (64) configuré pour annuler la relation de surveillance en fonction de la demande d'annulation de la relation de surveillance et supprimer la plage Internet à laquelle l'accès est autorisé.
